**Europäisches Patentamt**

(19) **European Patent Office**

**Office européen des brevets**

(11) Numéro de publication: **0 104 113**
**B1**

(12) # FASCICULE DE BREVET EUROPÉEN

(45) Date de publication du fascicule du brevet:
**17.12.86**

(51) Int. Cl.⁴: **B 23 K 9/02, B 23 Q 35/13**

(21) Numéro de dépôt: **83401783.2**

(22) Date de dépôt: **13.09.83**

(54) Procédé et dispositif de positionnement latéral d'un organe par rapport à un joint formé entre deux surfaces métalliques et présentant des discontinuités.

(30) Priorité: **15.09.82 FR 8215569**

(43) Date de publication de la demande:
**28.03.84 Bulletin 84/13**

(45) Mention de la délivrance du brevet:
**17.12.86 Bulletin 86/51**

(84) Etats contractants désignés:
**BE DE GB IT SE**

(56) Documents cité:
**EP-A-0 036 358**
**EP-A-0 064 454**
**DE-A-1 615 529**
**FR-A-2 267 854**
**US-A-4 206 391**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Detriche, Jean- Marie, 38, rue de Tourville, F-78100 Saint Germain en Laye (FR)**

(74) Mandataire: **Mongrédien, André, c/o BREVATOME 25, rue de Ponthieu, F-75008 Paris (FR)**

## Description

La présente invention concerne un procédé de positionnement latéral d'un organe par rapport à un joint, formé entre deux surfaces métalliques et présentant des discontinuités, ainsi qu'un dispositif pour la mise en oeuvre de ce procédé.

De façon plus précise, l'invention se rapporte au problème du positionnement latéral automatique d'un organe tel qu'une torche de soudage par rapport au joint séparant deux pièces à souder, lorsque ces pièces sont maintenues en position par des points de soudure réalisés au préalable. Ces points de soudure sont le plus souvent réalisés à la main, de façon aléatoire, de telle sorte que leur espacement et leur forme sont variables. Ces points de soudure constituent donc des discontinuités du joint formé entre les deux pièces, qui sont réparties de façon aléatoire le long du joint.

On conçoit que la présence de ces points de soudure le long du joint séparant les deux pièces à souder risque de pertuber le fonctionnement d'une tête de soudage équipée d'un dispositif assurant son positionnement latéral automatique. En effet, le dispositif de positionnement automatique risque de perdre le joint au moment du passage du point de soudure et, donc, de guider la torche de soudage hors de la zone de travail.

Ces risques sont particulièrement importants lorsque le dispositif de positionnement latéral automatique utilise des capteurs électriques du type à courants de Foucault, car ces capteurs réagissent de façon très sensible aux points de soudure qui constituent une discontinuité du joint séparant les surfaces métalliques, c'est-à-dire un court-circuit entre les surfaces des tôles a souder. On ne peut donc pas commander la torche de soudage directement en fonction des informations fournies par les capteurs, car cela conduirait à des écarts de position très importants au niveau du passage des points de soudure.

Bien entendu, l'application au soudage de deux tôles n'est pas limitative et l'invention peut être utilisée pour résoudre tout problème de positionnement latéral d'un organe par rapport à un joint formé entre deux surfaces métalliques et présentant des discontinuités.

Dans l'état actuel de la technique, il existe, d'une part, des capteurs en contact avec le joint, et d'autre part, des capteurs sans contact.

Parmi les capteurs en contact avec le joint, on connaît de capteurs de type passif qui sont constitués par des tiges de palpage maintenues en appui dans le joint et dont les déplacements sont détectés par des capteurs de position qui permettent de localiser le joint dans un plan transversal à celui-ci. Le comportement de ces systèmes de détection au passage des points de soudure n'est pas satisfaisant, car la tige risque de perdre son guidage et de quitter le joint. Des dispositifs mécaniques adaptables à l'extrémité des tiges de palpage permettent, dans certains cas, de passer les points de soudure, mais la fiabilité de ces systèmes n'est pas absolue.

Parmi les capteurs en contact avec le joint, il existe aussi des capteurs de type actif qui comprennent également une tige de palpage reliée à des capteurs de position, ainsi que des actionneurs permettant de mobiliser la tige. Avec de tels capteurs, on peut envisager d'enregistrer la position des discontinuités le long du joint lors d'une opération d'apprentissage préalable au soudage. Au cours de l'opération de soudage proprement dite, le dispositif est alors rendu inactif au moment du passage des points de soudure. Cependant, dans un tel système, l'opération d'enregistrement est longue et coûteuse, de telle sorte qu'elle est considérée comme inadaptée au problème.

Les systèmes de détection connus en contact avec les tôles ne résolvent donc pas de façon satisfaisante le problème du passage des points de soudure dans un joint formé entre deux surfaces métalliques.

En ce qui concerne les capteurs sans contact, l'état de la technique est encore plus réduit puisqu'aucune publication concernant ces capteurs, qu'ils soient à courants de Foucault ou d'un autre type (optique par exemple) ne mentionne le problème du passage des points de soudure.

Un exemple de capteur sans contact est donné par le document US-A-3 484 667. Ce capteur comprend deux sondes à courants de Foucault décalées dans le sens au joint et assurant respectivement le positionnement latéral et le positionnement en hauteur d'une torche de soudage.

La présente invention a précisément pour objet d'apporter une solution au problème du passage des points de soudure, qui soit à la fois simple à mettre en oeuvre et économique, dans le cas où les capteurs utilisés sont des capteurs sans contact, à courants de Foucault.

A cet effet et conformément à l'invention, il est proposé un procédé de positionnement latéral d'un organe par rapport à un joint, formé entre deux surfaces métalliques et présentant des discontinuités, selon lequel on utilise au moins une sonde comprenant deux bobines à courants de Foucault situées de pont et d'autre du joinnt et disposées symmétriquement par rapport ou plan perpendiculaire auxdites surfaces et passant par le joint, dans un plan transversal par rapport à ce dernier, chacune des sondes délivrant un premier signal que l'on traite pour obtenir un signal de positionnement qui varie avec le décalage de l'axe de la sonde par rapport à l'axe du joint, et on transmet ce signal de positionnement à des moyens d'asservissement commandant le déplacement latéral dudit organe, caractérisé en ce qu'on utilise au moins deux sondes à courants de Foucault décalées dans le sens du joint, on compare le signal de positionnement correspondant à chacune des sondes aux bornes d'un intervalle déterminé, et on interrompt la transmission de l'un des signaux de positionnement aux moyens d'asservissement lorsque ce signal sort dudit intervalle.

L'invention ainsi définie repose sur deux points:

1) l'idée très simple qui consiste à disposer plusieurs sondes dans le sens du joint, ce qui permet d'assurer dans tous les cas l'asservissement de la torche de soudage en utilisant les signaux valides délivrés par au moins une des sondes et de ne pas tenir compte de la sortie de la ou des autres sondes lorsqu'elles passent devant un point de soudure.

2) la constatation expérimentale que le passage sur un point de soudure d'une sonde à courants de Foucault produit une variation brusque, de signe quelconque, de l'amplitude du signal délivré par cette sonde; la détection de cette variation permet de signaler le passage de la sonde devant un point de soudure, donc de commander l'interruption de la transmission du signal correspondant aux moyens d'asservissement. Les résultats obtenus expérimentalement en mettant en oeuvre un tel procédé se sont avérés satisfaisants.

Selon une première variante de réalisation de l'invention, on détermine la somme des signaux de positionnement contenus dans ledit intervalle, pour transmettre aux moyens d'asservissement un signal représentatif de cette somme.

Selon une deuxième variante de réalisation de ce procédé, on détermine la moyenne pondérée des signaux de positionnement contenus dans ledit intervalle, pour transmettre aux moyens d'asservissement un signal représentatif de cette moyenne.

De préférence, on règle le gain du signal de positionnement correspondant à chaque sonde, de telle sorte que l'intervalle soit le même pour chacun des signaux de positionnement.

Selon un mode de réalisation préféré de l'invention, on redresse chaque signal de positionne ment avant de le comparer à un seuil.

De préférence, afin de s'affranchir du bruit de mesure, on peut filtrer chaque signal de positionnement mesuré et soustraire ce signal filtré du signal de positionnement avant de le comparer audit intervalle.

L'invention a également pour objet un dispositif pour la mise en oeuvre du procédé de positionnement défini précédemment.

De façon plus précise, l'invention concerne alors un dispositif de positionnement latéral d'un organe par rapport à un joint formé entre deux surfaces métalliques et présentant des discontinuités, ce dispositif comprenant au moins une sonde comprenant deux bobines à courants de Foucault situées de part et d'autre du joint et disposées symétriquement par rapport au plan perpendiculaire auxdites surfaces et passant par le joint, dans un plan transversal par rapport à ce dernier, chacune des sondes délivrant un premier signal, au moins un moyen de traitement de ce premier signal délivrant un signal de positionnement représentatif du décalage de l'axe de la sonde par rapport à l'axe du joint, et des moyens d'asservissement sensibles à ce signal de positionnement pour commander le déplacement latéral dudit organe, ce dispositif étant caractérisé en ce qu'il comprend au moins deux sondes à courants de Foucault décalées dans le sens du joint, un moyen de traitement associé à chaque sonde, des moyens pour comparer le signal de positionnement délivré par chaque moyen de traitement aux bornes d'un intervalle déterminé, et des moyens pour interrompre la transmission de l'un des signaux de positionnement aux moyens d'asservissement lorsque ce signal sort dudit intervalle.

On décrira maintenant, à titre d'exemple non limitatif, un mode de réalisation particulier de l'invention, en se référant aux dessins annexés dans lesquels:

- les figures 1a et 1b illustrent respectivement de façon schématique, la courbe de réponse d'un capteur à courants de Foucault à deux bobines situées de part et d'autre du joint, lorsque le joint est parfaitement aligné avec le mouvement de la torche de soudage, d'une part, lorsque le joint ne présente aucun point de soudure et, d'autre part, lorsque le joint présente des points de soudure;

- les figures 2a et 2b sont des vues comparables aux figures 1a et 1b illustrant le cas où le joint à souder n'est pas parfaitement aligné avec le mouvement de la torche de soudage;

- La figure 3 illustre de façon schématique un mode de réalisation de l'invention selon lequel le détecteur comprend trois capteurs à courants de Foucault décalés dans le sens du joint;

- la figure 4 montre un premier mode de réalisation du circuit de traitement électronique des signaux délivrés par les trois sondes du capteur de la figure 3 permettant d'assurer l'asservissement d'un organe tel qu'une torche de soudage à suivre un joint formé entre deux tôles à souder;

- la figure 5 montre un deuxième mode de réalisation du circuit de traitement de la figure 4; et

- les figures 6a et 6b illustrent respectivement une variante pouvant être introduite dans les circuits de traitement des figures 4 et 5 et l'évolution, en fonction du temps, des signaux apparaissant en différents points du circuit ainsi modifié.

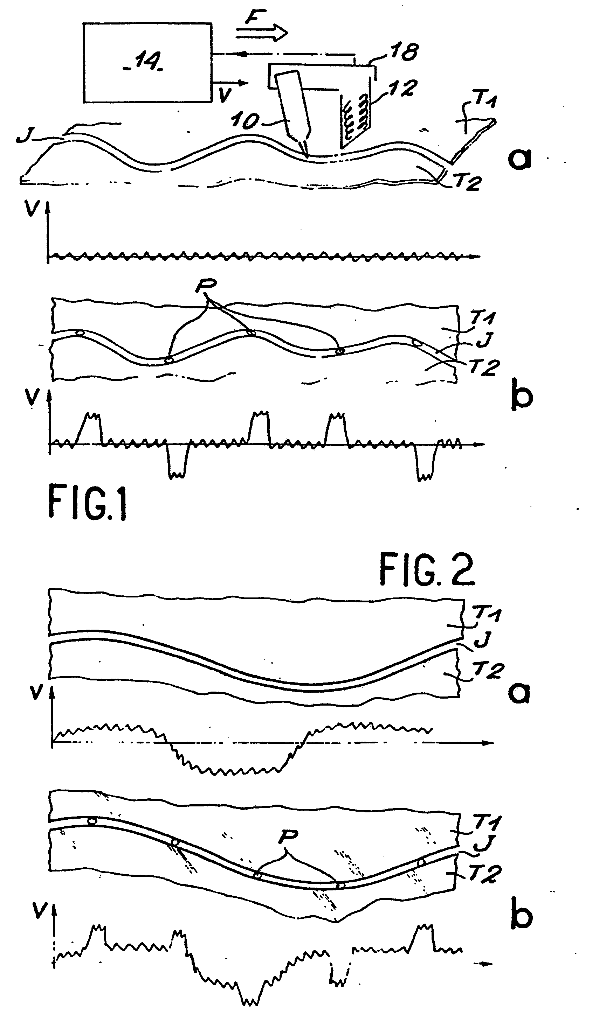

Sur la partie haute de la figure 1a, on a représenté de façon schématique deux tôles $T_1$ et $T_2$ à souder, présentant entre elles un joint J dépourvu de discontinuités, ainsi que la torche de soudage 10, en avant de laquelle (sens de déplacement F) est disposé un capteur à courants de Foucault 12 délivrant un signal que l'on traite dans un circuit de traitement 14 associé au capteur, de façon à obtenir un signal V représentatif du décalage éventuel du capteur par rapport au joint. Ce signal V peut servir à commander le de, lacement de la tête de soudage 18 portant la torche et le capteur, par l'intermédiaire d'un moteur d'asservissement (non représenté).

Le capteur à courants de Foucault 12 est constitué par une sonde comprenant deux bobones situées de part et d'autre du joint J et disposées symétriquement par rapport au plan perpendiculaire aux tôles $T_1$ et $T_2$ et passant par le joint, dans un plan transversal par rapport à ce dernier. Le circuit de traitement 14 effectue une mesure différentielle de phase conformément aux enseignements de la demande FR-A-2 477 935 au nom du Commissariat à l'Energie Atomique.

On a représenté aussi sur la partie basse de la figure 1a l'évolution du signal V délivré par le circuit de traitement 14 en fonction du déplacement de la tête de soudage 18, lorsque le joint est parfaitement aligné avec le mouvement de cette dernière. On voit que dans ces conditions, ce signal V est pratiquement nul, aux bruits de mesure près.

On voit au contraire sur la figure 1b que si l'on refait la même expérimentation dans le cas où les tôles $T_1$ et $T_2$ sont maintenues en place par des points de soudure P répartis le long du joint J, le signal V délivré par le circuit de traitement présente une variation au passage des points de soudure. Cette variation est de signe aléatoire, en fonction de l'allure du point qui peut être de grosseur variable et excentré par rapport au joint. Compte tenu de cette variation du signal au passage des points, un asservissement direct sur la sortie du circuit de traitement 14 associé au capteur ne permettrait pas de se caler sur le joint en permanence.

Les expérimentations illustrées aux figures 1a et 1b permettent d'analyser le comportement des signaux lorsque le support de l'outil suit rigoureusement le joint, c'est-à-dire lorsque l'asservissement n'entre pas en jeu. Au contraire, les expérimentations illustrées sur les figures 2a et 2b concernent le cas où le capteur est effectivement asservi au suivi de ce joint. Dans ce cas, on voit notamment sur la figure 2a qui concerne, comme la figure 1a, le cas où le joint J ne présente aucune discontinuité, que le signal V obtenu à la sortie du circuit 14 est une image du signal d'erreur de l'asservissement.

Dans le cas de la figure 2b qui illustre comme la figure 1b, l'expérimentation correspondant à un joint présentant des points de soudure F, ce signal V présente en outre, au passage des points de soudure, des pics bruités de signe aléatoire.

A partir de cette expérimentation illustrée sur la figure 2b, qui correspond au cas classique d'un asservissement de position sur un joint muni de points de soudure, l'invention propose:

1°/ de ne pas tenir compte du signal V obtenu à partir d'une sonde à courants de Foucault lorsque celle-ci passe sur un point de soudure, c'est-à-dire lorsque ce signal V subit une variation brusque d'amplitude dépassant un seuil déterminé; et

2°/ d'assurer le guidage du capteur lors de son passage sur le point de soudure, ce qui conduit à utiliser un capteur comprenant au moins deux sondes décalées dans le sens du joint.

La disposition de ces sondes doit bien entendu être telle que la mesure réalisée à l'aide d'au moins l'une d'entre elles soit valide, afin d'assurer la continuité de l'asservissement.

Il existe une autre limitation d'utilisation de tels capteurs qui est due au rayon de courbure du joint à souder ou, ce qui est équivalent, à l'écart maximal admissible entre la position théorique et la position réelle du joint.

En effet, il ne faut pas qu'il y ait de confusion entre un écart de tension ressenti sur une sonde par suite du passage de cette sonde sur un point de soudure ou en raison de la détection d'un écart de trajectoire. Toutefois, on notera que, dans la pratique, les trajectoires sont quasiment rectilignes et leur variation de position lente. D'autre part, on verra dans la suite de la description qu'il est possible d'asservir le bloc détecteur sur une valeur moyenne des réponses des sondes, ce qui a pour conséquence de réduire les écarts de trajectoire éventuellement détectés. En conséquence, cette limitation d'utilisation est pratiquement sans effet.

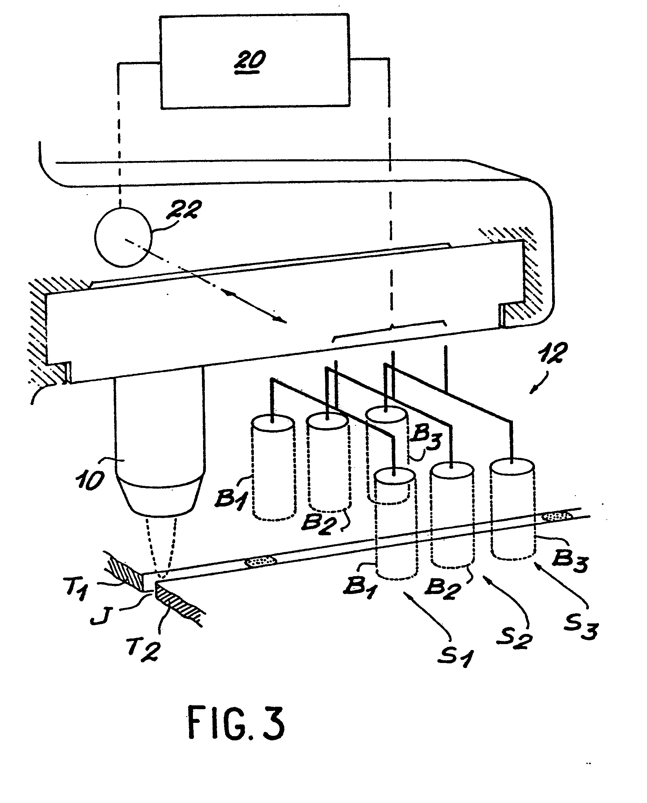

On a représenté à titre d'exemple sur la figure 3, le cas où le capteur 12 comprend trois sondes $S_1$, $S_2$ et $S_3$ décalées dans le sens du joint et comportant chacune deux bobines à courants de Foucault $B_1$, $B_2$ et $B_3$, respectivement disposées de part et d'autre du joint. Les signaux délivrés par le capteur 12 sont transmis à des moyens de traitement électroniques 20 qui délivrent un signal de positionnement servant à commander le calage latéral de la torche 10 et du capteur 12, au moyen d'un moteur d'asservissement 22.

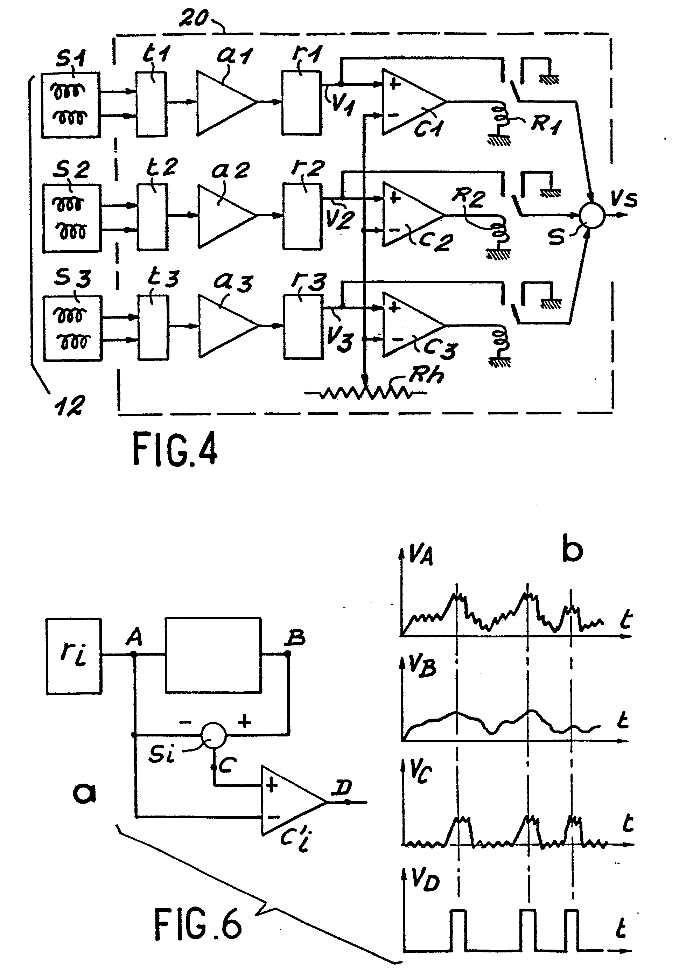

Sur la figure 4, on a représenté plus en détail les moyens de traitement 20 qui comprennent sur chacune des sondes $S_1$, $S_2$ et $S_3$ du capteur 12, une chaîne électronique de traitement identique, ces chaînes électroniques fonctionnant en parallèle.

Ainsi, le signal délivré par chacune des sondes $S_1$, $S_2$ et $S_3$, est traité dans un circuit de traitement $t_1$, $t_2$ et $t_3$ respectivement, de façon à obtenir un signal de positionnement représentatif du décalage de l'axe de la sonde cor respondante par rapport à l'axe du joint. De préférence, comme le circuit 14 sur la figure 1a, les circuits de traitement $t_1$, $t_2$ et $t_3$ sont des circuits effectuant une mesure différentielle de phase conformément aux enseignements de la demande de brevet français n° 80 05 909 au nom du Commissariat à l'Energie Atomique.

Les signaux de positionnement délivrés par les circuits de traitement $t_1$, $t_2$ et $t_3$ sont appliqués à l'entrée de trois amplificateurs $a_1$, $a_2$, $a_3$ respectivement. Ces amplificateurs ont pour fonction de régler la dynamique des signaux de positionnement, c'est-à-dire d'équilibrer ces signaux de telle sorte qu'ils soient de même amplitude lorsque les sondes correspondantes sont dans la même situation. Ce réglage est obtenu en ajustant les gains des amplificateurs.

Les signaux délivrés par chacun des amplificateurs $a_1$, $a_2$ et $a_3$, sont ensuite redressés dans des redresseurs $r_1$, $r_2$ et $r_3$ respectivement.

De cette manière, on tient compte du caractère aléatoire du signe des signaux délivrés par les circuits de traitement en présence de points de soudure.

Les signaux redressés sont ensuite appliqués à l'entrée positive de trois comparateurs $c_1$, $c_2$ et $c_3$ dont les entrées négatives sont reliées à une source de tension (non représentée) au travers d'un rhéostat Rh définissant un seuil réglable. Grâce à la présence des amplificateurs $a_1$, $a_2$ et $a_3$ qui assurent le réglage de la dynamique de réponse des trois circuits parallèles, il est en effet possible de n'avoir qu'un seul niveau de seuil réglé simultanément pour les trois circuits.

Le signal de sortie de chacun des comparateurs $c_1$, $c_2$ et $c_3$ commande ensuite un relais de commutation $R_1$, $R_2$ et $R_3$ respectivement. Lorsque ces relais ne sont pas excités, c'est-à-dire lorsque les signaux $V_1$, $V_2$ et $V_3$ sortant des redresseurs $r_1$, $r_2$ et $r_3$ sont inférieurs au seuil des comparateurs, ces signaux $V_1$, $V_2$ et $V_3$ sont appliqués aux entrées d'un sommateur S. Au contraire, lorsque l'un des relais $R_1$, $R_2$ ou $R_3$ est excité, c'est-à-dire lorsque le signal $V_1$, $V_2$ ou $V_3$ correspondant est supérieur au seuil determiné par le rhéostat $R_h$, l'entrée correspondante du sommateur S est connectée à la masse.

Dans une variante non représentée, les relais de commutation pourraient être remplacés par des portes analogiques.

Enfin, le sommateur S délivre un signal $V_s$ qui alimente le moteur 22 (figure 3) commandant l'asservissement de la tête de soudage portant la torche et le capteur.

Le circuit de traitement de la figure 4, permet donc de ne pas transmettre au moteur M les signaux dépassant un certain seuil, ce seuil étant déterminé au préalable de façon à correspondre au pic émis par une sonde en présence d'un point de soudure, comme on l'a décrit en se référant à la figure 2b. Ce circuit permet en outre de commander le moteur d'asservissement 22 à l'aide d'un signal $V_s$ représentant la somme des écarts de position mesurés à l'aide des sondes délivrant les signaux valides.

Ainsi, le circuit de la figure 4 ne permet pas d'obtenir réellement la moyenne des informations valides provenant du capteur à la sortie du sommateur S, mais seulement la somme des signaux valides. Cette caractéristique n'est généralement pas gênante dans la mesure où le le signal $V_s$ sert à commander un asservissement de position, puisqu'elle a pour seule conséquence d'accroître le gain de cet asservissement lorsque le nombre de sondes délivrant un, signal considéré comme valide augmente.

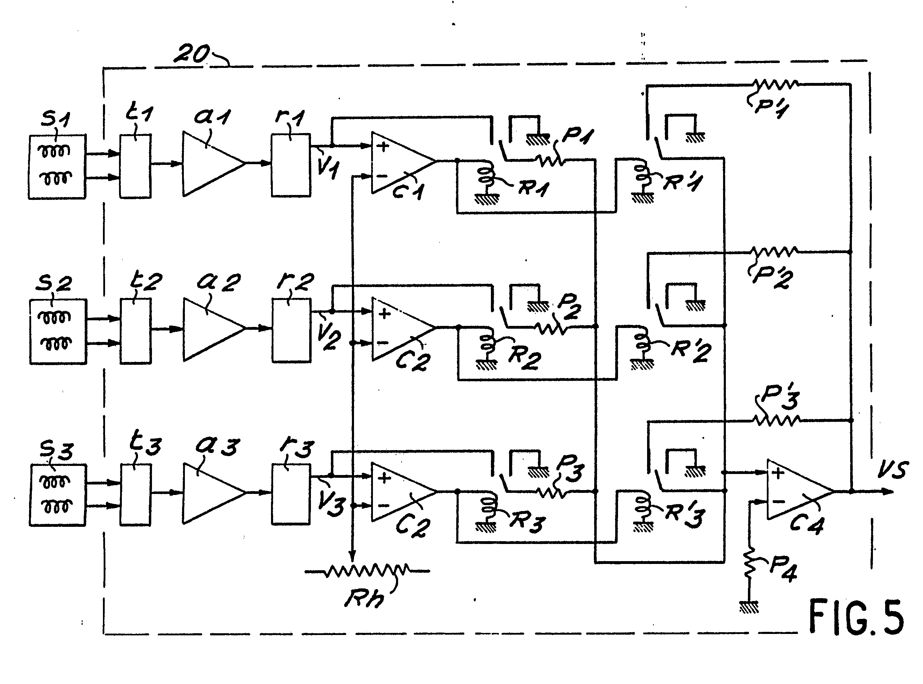

Il existe cependant des cas de détection délicats où l'on souhaite que le gain d'asservissement soit constant. A cet effet, on a représenté sur la figure 5 un deuxième mode de réalisation des moyens de traitement électroniques 20 dans lequel on détermine la moyenne pondérée des signaux considérés comme valides avant de commander le moteur d'asservissement.

De façon plus précise, le montage de la figure 5 est identique à celui de la figure 4 jusqu'à la sortie des relais de commutation $R_1$, $R_2$ et $R_3$. A ce niveau, au lieu d'être reliées directement aux entrées d'un sommateur S, les sorties des relais de commutation $R_1$, $R_2$ et $R_3$ sont connectées entre elles au travers de trois résistances $P_1$, $P_2$ et $P_3$, puis à l'entrée de trois relais de commutation du gain $R'_1$, $R'_2$ et $R'_3$ dont les bobines peuvent être excitées comme celles des relais $R_1$, $R_2$ et $R_3$ par les signaux sortant des comparateurs $c_1$, $c_2$ et $c_3$. Les sorties des relais $R_1$, $R_2$ et $R_3$ qui sont reliées au travers des résistances $P_1$, $P_2$ et $P_3$ sont également raccordées à l'entrée positive d'un comparateur $c_4$ dont l'entrée négative est connectée à la masse au travers d'une résistance $P_4$. Enfin, les sorties des relais $R'_1$, $R'_2$ et $R'_3$ sont connectées entre elles et à la sortie du comparateur $c_4$ au travers de trois résistances $P'_1$, $P'_2$ et $P'_3$. Le signal $V_s$ délivré à la sortie du comparateur $c_4$ sert à commander le moteur d'asservissement 22, comme dans le mode de réalisation de la figure 4.

Dans le circuit qui vient d'être décrit il faut noter que les valeurs des résistances $P_1$, $P_2$, $P_3$, $P'_1$, $P'_2$, $P'_3$ et $P_4$ sont les mêmes.

Lorsque les trois signaux sont considérés comme valides par les comparateurs $c_1$, $c_2$ et $c_3$, aucun des relais n'est excité et l'entrée positive du comparateur $c_4$ reçoit au travers des résistances $P_1$, $P_2$ et $P_3$, tous les signaux sortant des redresseurs $r_1$, $r_2$ et $r_3$. Simultanément, les relais $R'_1$, $R'_2$ et $R'_3$ fonctionnent dans le même sens que les relais $R_1$, $R_2$ et $R_3$, ces signaux sont également transmis à la sortie du comparateur $c_4$ au travers des résistances $P'_1$, $P'_2$ et $P'_3$.

Lorsqu'un des signaux par exemple $V_1$, n'est pas valide, il dépasse le seuil du comparateur $C_1$ correspondant et les deux relais $R_1$ et $R'_1$ qui lui sont associés sont excités. Les sorties de ces relais sont ainsi connectés à la masse.

Grâce à ces caractéristiques, le gain du circuit varie selon le nombre de sondes qui se trouvent validées par les comparateurs, de telle sorte que le signal $V_s$ qui est injecté au moteur d'asservissement 22 (figure 3) correspond à la sommation pondérée de ces signaux.

Si l'on se réfère à nouveau à la figure 2b, on observe que si le signal d'erreur est fortement variable, il peut être difficile de déterminer le niveau du seuil permettant de détecter les points de soudure sans risquer, soit de valider certains signaux alors que ceux-ci correspondent à un point de soudure, soit au contraire, d'annuler une partie d'un signal d'erreur qui devrait être considéré comme valable.

Afin de rémédier à cet inconvénient, on peut avoir recours, comme l'illustre la figure 6a, à un circuit de seuillage adaptatif. Un tel circuit peut être introduit aussi bien dans le circuit de la figure 4 que dans le circuit de la figure 5, dans chacun des circuits parallèles associés aux sondes $S_1$, $S_2$ et $S_3$, entre le redresseur $r_i$ et le

comparateur $c_i$.

Comme l'illustre la figure 6a, ce circuit de seuillage adaptif comprend un filtre passe-bas $f_i$ dans lequel est injecté le signal sortant du redresseur $r_i$, et un sommateur $s_i$ dans lequel le signal sortant du filtre $f_i$ est soustrait du signal redressé, de manière à supprimer le niveau variable perturbant la mesure.

Le signal délivré par le sommateur $s_i$ est injecté à l'entrée positive d'un comparateur $c'_i$, l'entrée négative de ce dernier étant reliée à la sortie du redresseur $r_i$.

Sur la figure 6b, on a représenté à titre d'exemple l'allure des signaux $V_A$ en un point A situé à la sortie du redresseur $r_i$, $V_B$ en un point B situé à la sortie du filtre passe-bas $f_i$, $V_C$ en un point C situé à la sortie du sommateur $s_i$ et $V_D$ en un point D situé à la sortie du comparateur $c'_i$, en fonction du temps $t_i$ Ce dernier signal $V_D$ est injecté à l'entrée positive du comparateur $c_1$, $c_2$ ou $c_3$ af in d'être comparé au seuil déterminé au moyen du rhéostat $R_h$.

Grâce au procédé et au dispositif qui viennent d'être décrits à titre d'exemple en se référant aux figures 1 à 6, on voit que le problème du passage des points de soudure par une tête de soudage équipée de capteurs à courants de Foucault est résolu d'une façon simple à mettre en oeuvre et économique à réaliser. De plus, les résultats obtenus expérimentalement sont satisfaisants.

Bien entendu, l'invention n'est pas limitée aux modes de réalisation qui viennent d'être décrits à titre d'exemple, mais en couvre toutes les variantes. En pariculier, on a vu que le nombre des sondes constituant le capteur peut correspondre à tout entier supérieur ou égal à 2. De même, on a vu que le circuit électronique de traitement des signaux peut subir un certain nombre de modifications sans sortir du cadre de l'invention. Enfin, les différents composants de ce circuit qui ont été décrits peuvent être remplacés par tout composant ou groupe de composants remplissant des fonctions équivalents. En particulier, les relais de commutation peuvent être remplacés par des portes analogiques.

## Revendications

1. Procédé de positionnement latéral d'un organe (10) par rapport à un joint (j), formé entre deux surfaces métalliques et présentant des discontinuités (P), selon lequel on utilise au moins une sonde ($S_1$, $S_2$, $S_3$) comprenant deux bobines à courants de Foucault ($B_1$, $B_2$, $B_3$) situées de part et d'autre du joint (J) et disposées symétriquement par rapport au plan perpendiculaire auxdites surfaces et passant par le joint, dans un plan transversal par rapport à ce dernier, chacune des sondes ($S_1$, $S_2$, $S_3$) délivrant un premier signal que l'on traite pour obtenir un signal de positionnement qui varie avec le décalage de l'axe de la sonde par rapport à l'axe du joint, et on transmet ce signal de positionnement à des moyens d'asservissement (22) commandant le déplacement latéral dudit organe, caractérisé en ce qu'on utilise au moins deux sondes à courants de Foucault ($S_1$, $S_2$, $S_3$) décalées dans le sens du joint, on compare le signal de positionnement correspondant à chacune des sondes aux bornes d'un intervalle déterminé, et on interrompt la transmission de l'un des signaux de positionnement aux moyens d' asservissement lorsque ce signal sort dudit intervalle.

2. Procédé selon la revendication 1, caractérisé en ce qu'on détermine la somme des signaux de positionnement contenus dans ledit intervalle, pour transmettre aux moyens d'asservissement un signal ($V_s$) représentatif de cette somme.

3. Procédé selon la revendication 1, caractérisé en ce qu'on détermine la moyenne pondérée des signaux de positionnement contenus dans ledit intervalle, pour transmettre aux moyens d'asservissement un signal ($V_s$) représentatif de cette moyenne.

4. Procédé selon l'une quelconque des revendications 1 à 3, caractérisé en ce qu'on règle le gain du signal de positionnement correspondant à chaque sonde de telle sorte que ledit intervalle soit le même pour chacun des signaux de positionnement.

5. Procédé selon l'une quelconque des revendications 1 à 4, caractérisé en ce qu'on redresse chaque signal de positionnement avant de le comparer à un seuil, définissant ainsi les bornes dudit intervalle.

6. Procédé selon l'une quelconque des revendications 1 à 5, caractérisé en ce qu'on filtre chaque signal de positionnement mesuré ($V_A$) et en ce qu'on soustrait ce signal filtré ($V_B$) du signal de positionnement mesuré avant de le comparer audit intervalle.

7. Dispositif de positionnement latéral d'un organe (10) par rapport à un joint (J) formé entre deux surfaces métalliques et présentant des discontinuités (P), ce dispositif comprenant au moins une sonde ($S_1$, $S_2$, $S_3$) comprenant deux bobines à courants de Foucault ($B_1$, $B_2$, $B_3$) situées de part et d'autre du joint (J) et disposées symétriquement par rapport au plan perpendiculaire auxdites surfaces et passant par le joint, dans un plan transversal par rapport à ce dernier, chacune des sondes ($S_1$, $S_2$, $S_3$) délivrant un premier signal, au moins un moyen de traitement ($t_1$, $t_2$, $t_3$) de ce premier signal délivrant un signal de positionnement représentatif du décalage de l'axe de la sonde par rapport à l'axe du joint, et des moyens d'asservissement (22) sensibles à ce signal de positionnement pour commander le déplacement latéral dudit organe, ce dispositif étant caractérisé en ce qu'il comprend au moins deux sondes à courants de Foucault ($S_1$, $S_2$, $S_3$) décalées dans le sens du joint, un moyen de traitement ($t_1$, $t_2$, $t_3$) associé à chaque sonde, des moyens ($c_1$, $c_2$, $c_3$) pour comparer le signal de positionnement délivré par chaque moyen de traitement à un intervalle déterminé, et des

moyens ($R_1$, $R_2$, $R_3$) pour interrompre la transmission de l'un des signaux de positionnement aux moyens d'asservissement lorsque ce signal sort dudit intervalle.

8. Dispositif selon la revendication 7, caractérisé en ce qu'il comprend de plus des moyens (S) pour additionner les signaux de positionnement délivrés par les moyens de traitement et contenus dans ledit intervalle, avant de transmettre ces signaux aux moyens d'asservissement (22).

9. Dispositif selon la revendication 7, caractérisé en ce qu'il comprend de plus des moyens ($R'_1$, $R'_2$, $R'_3$) pour déterminer la moyenne pondérée des signaux de positionnement contenus dans ledit intervalle, avant de transmettre ces signaux aux moyens d'asservissement (22).

10. Dispositif selon l'une quelconque des revendications 7 à 9, caractérisé en ce qu'il comprend de plus un moyen ($a_1$, $a_2$, $a_3$) pour amplifier le signal de positionnement correspondant à chaque sonde avec un gain tel que ledit intervalle soit le même pour chacun des signaux de positionnement.

11. Dispositif selon l'une quelconque des revendications 7 à 10, caractérisé en ce qu'il comprend de plus un moyen ($r_1$, $r_2$, $r_3$) pour redresser chacun des signaux de positionnement avant de le transmettre au moyen ($c_1$, $c_2$, $c_3$) pour comparer ce signal à un seuil, définissant les bornes dudit intervalle.

12. Dispositif selon l'une quelconque des revendications 7 à 11, caractérisé en ce qu'il comprend de plus des moyens de filtrage ($f_i$) de chaque signal de positionnement mesuré ($V_A$) et des moyens ($s_i$) pour soustraire ce signal filtré ($V_B$) du signal de positionnement mesuré, avant de le transmettre au moyen ($c_1$, $c_2$, $c_3$) pour le comparer audit intervalle.

## Patentansprüche

1. Verfahren zur seitlichen Lageeinstellung eines Organes (10) bezüglich einer zwischen zwei Metalloberflächen gebildeten und Unterbrechungen (P) aufweisenden Spalte, bei dem man wenigstens einen Fühler ($S_1$, $S_2$, $S_3$) verwendet, der zwei Wirbelstromspulen ($B_1$, $B_2$, $B_3$) aufweist, die sich beidseitig der Spalte (J) befinden und bezüglich der zu den Oberflächen senkrechten und durch die Spalte hindurchgehenden Ebene in einer quer zu letzterer verlaufenden Ebene angeordnet sind, wobei jeder Fühler ($S_1$, $S_2$, $S_3$) ein erstes Signal abgibt welches verarbeitet wird, um ein Lagesignal zu erhalten, das sich mit der Verschiebung der Fühlerachse bezuglich der Spaltachse verändert, und dieses Lagesignal wird zu Steuerungsmitteln (22) übertragen, die die seitliche Verschiebung des Organs steuern, dadurch gekennzeichnet, daß man wenigstens zwei Wirbelstromfühler ($S_1$, $S_2$, $S_3$) verwendet,

die in Spaltrichtung versetzt sind, daß man das Lagesignal, welches jedem der Fühler entspricht, mit den Grenzen eines bestimmten Intervalls vergleicht, und daß man die Übertragung eines der Lagesignale zu den Steuermitteln unterbricht, wenn dieses Signal außerhalb des Intervalls liegt.

2. Verfahren nach Anspruch 1, dadurch gekennzeichnet, daß man die Summe der in diesem Intervall enthaltenen Lagesignale bestimmt, um den Steuermitteln ein diese Summe anzeigendes Signal ($V_s$) zu übertragen.

3. Verfahren nach Anspruch 1, dadurch gekennzeichnet, daß man das gewichtete Mittel der in dem Intervall enthaltenen Lagesignale bestimmt, um den Steuermitteln ein dieses Mittel anzeigendes Signal ($V_s$) zu übertragen.

4. Verfahren nach einem der Ansprüche 1 bis 3, dadurch gekennzeichnet, daß man die Verstärkung des jedem Fühler entsprechenden Lagesignals derart regelt, daß das Intervall für jedes der Lagesignale das gleiche ist.

5. Verfahren nach einem der Ansprüche 1 bis 3, dadurch gekennzeichnet, daß man das Lagesignal gleichrichtet, bevor es mit einer Schwelle verglichen wird, welche somit die Grenzen des Intervalls festlegt.

6. Verfahren nach einem der Ansprüche 1 bis 5, dadurch gekennzeichnet, daß jedes gemessene Lagesignal ($V_A$) gefiltert wird und daß man dieses gefilterte Signal ($V_B$) von dem gemessenen Lagesignal vor dessen Vergleich mit dem Intervall subtrahiert.

7. Vorrichtung zur seitlichen Lageeinstellung eines Organs (10) bezüglich einer zwischen zwei Metalloberflächen gebildeten und Unterbrechungen (P) aufweisenden Spalte (J) mit wenigstens einem Fühler ($S_1$, $S_2$, $S_3$), der zwei Wirbelstromspulen ($B_1$, $B_2$, $B_3$) aufweist, die sich beidseitig der Spalte (J) befinden und symmetrisch in Bezug auf die zu den Oberflächen senkrechte und durch den Spalt hindurchgehende Ebene in einer bezüglich letzterer querverlaufenden Ebene angeordnet sind, wobei jeder der Fühler ($S_1$, $S_2$, $S_3$) ein erstes Signal liefert, mit wenigstens einer Verarbeitungseinrichtung ($t_1$, $t_2$ $t_3$) für dieses erste Signal, die ein die Abweichung der Fühlerachse bezüglich der Spaltachse anzeigendes Lagesignal abgibt, und mit auf dieses Lagesignal ansprechenden Steuermitteln (22), um die seitliche Verschiebung des Organs zu steuern, dadurch gekennzeichnet, daß die Vorrichtung wenigstens zwei in Spaltrichtung versetzte Wirbelstromfühler ($S_1$, $S_2$, $S_3$), eine jedem Fühler zugeordnete Verarbeitungseinrichtung ($t_1$, $t_2$, $t_3$), Mittel ($c_1$, $c_2$, $c_3$) zum Vergleichen des von jeder Verarbeitungseinrichtung gelieferten Lagesignals mit einem bestimmten Intervall, und Mittel ($R_1$, $R_2$, $R_3$) aufweist, um die Übertragung eines der Lagesignale zu den Steuermitteln zu unterbrechen, wenn dieses Signal das Intervall verläßt.

8. Vorrichtung nach Anspruch 7, dadurch gekennzeichnet, daß sie ferner Mittel (S) aufweist, um die von den Verarbeitungseinrichtungen gelieferten und in dem Intervall enthaltenen Lagesignale aufzusummieren, bevor diese Signale an die Steuermittel (22) übertragen werden.

9. Vorrichtung nach Anspruch 7, dadurch gekennzeichnet daß sie ferner Mittel ($R'_1$ $R'_2$, $R'_3$) umfaßt, um das gewichtete Mittel der in dem Intervall enthaltenen Lagesignale zu bestimmen, bevor diese Signale den Steuermitteln (22) zugeführt werden.

10. Vorrichtung nach einem der Ansprüche 7 bis 9, dadurch gekennzeichnet, daß sie ferner eine Einrichtung ($a_1$, $a_2$, $a_3$) zum Verstärken des jedem Fühler entsprechenden Lagesignals mit einem Verstärkungsfaktor aufweist derart, daß das Intervall das gleiche für jedes der Lagesignale ist.

11. Vorrichtung nach einem der Ansprüche 7 bis 10, dadurch gekennzeichnet, daß ferner eine Einrichtung ($r_1$, $r_2$, $r_3$) vorgesehen ist, um jedes der Lagesignale gleichzurichten, bevor es der Einrichtung ($c_1$, $c_2$, $c_3$) zugeführt wird, um dieses Signal mit einer Schwelle zu vergleichen, welche die Grenzen des Intervalls festlegt.

12. Vorrichtung nach einem der Ansprüche 7 bis 11, dadurch gekennzeichnet, daß sie ferner Filtermittel ($f_1$) für jedes gemessene Lagesignal ($V_A$) und Mittel ($S_1$) aufweist, um dieses gefilterte Signal ($V_B$) von dem gemessenen Lagesignal zu subtrahieren, bevor es der Einrichtung ($c_1$, $c_2$, $c_3$) zugeführt wird, um es mit dem Intervall zu vergleichen.

## Claims

1. Process for the lateral positioning of a member (10) with respect to a joint (J), formed between two metallic surfaces and having discontinuities (P), according to which there is used at least one probe ($S_1$, $S_2$, $S_3$) comprising two eddy current coils ($B_1$, $B_2$, $B_3$) situated on either side of the joint (J) and arranged symmetrically with respect to the plane perpendicular to the said surfaces and passing through the joint, in a plane that is transverse with respect to the joint, each of the probes ($B_1$, $B_2$, $B_3$) delivering a first signal that is processed in order to obtain a positioning signal which varies according to the offset of the axis of the probe with respect to the axis of the joint, and this positioning signal is transmitted to means of control (22) controlling the lateral displacement of the said member characterized in that there is used at least two eddy current probes ($S_1$, $S_2$, $S_3$) offset in the direction of the joint, the positioning signal corresponding to each of the probes is compared at the limits of a specified interval, and the transmission of one of the positioning signals to the means of control is interrupted when this signal goes outside the said interval.

2. Process according to Claim 1, characterized in that the sum of the positioning signals contained in the said interval is determined in order to transmit to the means of control a signal ($V_s$) representing this sum.

3. Process according to Claim 1, characterized in that the weighted average of the positioning signals contained in the said interval is determined in order to transmit to the means of control a signal ($V_s$) representing this average.

4. Process according to any of Claims 1 to 3, characterized in that the gain of the positioning signal corresponding to each probe is adjusted such that the said interval is the same for each of the positioning signals.

5. Process according to any of Claims 1 to 4, characterized in that each positioning signal is rectified before being compared with a threshold, thus defining the limits of the said interval.

6. Process according to any of Claims 1 to 5, characterized in that each measured positioning signal ($V_A$) is filtered and in that this filtered signal ($V_B$) is subtracted from the measured positioning signal before being compared with the said interval.

7. Device for the lateral positioning of a member (10) with respect to a joint (J) formed between two metallic surfaces and having discontinuities (P), this device including at least one probe ($S_1$, $S_2$, S3) comprising two eddy current coils ($B_1$, $B_2$, $B_3$) situated on either side of the joint (J) and arranged symmetrically with respect to the plane perpendicular to the said surfaces and passing through the joint, in a plane that is transverse with respect to the joint, each of the probes ($S_1$, $S_2$, $S_3$) delivering a first signal, at least one means ($t_1$, $t_2$, $t_3$) of processing this first signal delivering a positioning signal representing the offset of the axis of the probe with respect to the axis of the joint, and means of control (22) sensitive to this positioning signal for controlling the lateral displacement of the said member, this device being characterized in that it includes at least two eddy current probes ($S_1$, $S_2$, $S_3$) offset in the direction of the joint, a means of processing ($t_1$, $t_2$, $t_3$) associated with each probe, means ($c_1$, $c_2$, $c_3$) of comparing the positioning signal delivered by each means of processing with a determined interval, and means ($R_1$, $R_2$, $R_3$) for interrupting the transmission of one of the positioning signals to the means of control when this signal goes outside the said interval.

8. Device according to Claim 7, characterized in that it also includes means (S) of adding the positioning signals delivered by the means of processing and contained within the said interval, before these signals are transmitted to the means of control (22).

9. Device according to Claim 7, characterized in that it also includes means ($R'_1$, $R'_2$, $R'_3$) of determining the weighted average of the positioning signals contained within the said interval, before these signals are transmitted to the means of control (22).

10. Device according to any of Claims 7 to 9, characterized in that it also includes a means ($a_1$,

$a_2$, $a_3$) of amplifying the positioning signal corresponding to each probe, with a gain such that the said interval is the same for each of the positioning signals.

11. Device according to any of Claims 7 to 10, characterized in that it also includes a means ($r_1$, $r_2$, $r_3$) of rectifying each of the positioning signals before it is transmitted to the means ($c_1$, $c_2$, $c_3$) of comparing this signal with a threshold, defining the limits of the said interval.

12. Device according to any of Claims 7 to 11, characterized in that it also includes means ($f_i$) of filtering each measured positioning signal ($V_A$) and means ($s_i$) of subtracting this filtered signal ($V_B$) from the measured positioning signal, before it is transmitted to the means ($c_1$, $c_2$, $c_3$) of comparing it with the said interval.

FIG.1

FIG. 2

1

FIG. 3

FIG.4

FIG.6

FIG.5